(19)

Europäisches Patentamt
European Patent Office
Office européen des brevets

(11) **EP 3 832 597 A1**

(12) **EUROPEAN PATENT APPLICATION**

(43) Date of publication:
**09.06.2021 Bulletin 2021/23**

(51) Int Cl.:
*G06T 7/11* (2017.01)          *G06T 7/187* (2017.01)

(21) Application number: **19214232.1**

(22) Date of filing: **06.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Microsoft Technology Licensing, LLC Redmond, WA 98052-6399 (US)**

(72) Inventors:
• **ALVAREZ-VALLE, Javier**
  **Redmond, Washington 98052-6399 (US)**
• **LOWE, Richard W**
  **Redmond, Washington 98052-6399 (US)**

(74) Representative: **Townsend, Martyn**
**Page White & Farrer**
**Bedford House**
**John Street**
**London WC1N 2BF (GB)**

(54) **REFINEMENT OF IMAGE SEGMENTATION**

(57)    A computer-implemented method comprising: receiving an image including an object depicted in the image; obtaining initial segmentation data defining segmentation of the image, the initial segmentation data comprising a first contour around the object; rendering the image and the first contour on a user display; providing a user-interface tool enabling a user to refine the first contour to define a refined line replacing a part of the first contour to thereby form a second contour around the object, wherein the user uses the tool to draw a user-drawn line on the rendered image and the refined line comprises at least the user-drawn line; and rendering the second contour on the image in place of the first.

<u>Figure 1</u>

EP 3 832 597 A1

**Description**

Background

Image segmentation involves assigning labels to elements classifying whether they belong to the 'foreground' (the element to label), or 'background' (the elements to be excluded from the label). An example would be to outline all the cars on an image of a street. Aspects of the cars would be marked as 'foreground', and the street road, signs, houses, would be marked as 'background'. Another example would be to segment a medial scan, such as to outline as foreground an organ or tumour in the image.

An example of automated image segmentation is disclosed in US 10,235,605. This uses the concept of 'geodesic distance' between points in the image. Geodesic distance is a measure of distance that takes into account one or more parameters in the image, such as pixel intensity. The intensity could be thought of like the height on a map: the shortest distance between two points might be to go around a hill rather than over it. In other words, the measure of distance is weighted by the intensity (or other such parameter) of the pixels or points along the route. Pixels, or voxels in a 3D image, can be marked as foreground or background and passed into the geodesic distance algorithm to compute a resulting foreground segmentation.

Once an initial image segmentation has been performed, a user may wish to make modifications if the underlying algorithm or initial user inputs produced an outcome that did not match the required result. There are existing tools for refining an image segmentation, such as to use a mouse pointer to drag vertices on the outline (contour) around the foreground object, or to re-paint the foreground using a foreground painting tool. These enable the user to refine the segmentation to produce a different segmentation result than was initially determined.

Summary

However, these tools may be inaccurate or cumbersome to use. It would be desirable to provide an alternative tool for refining the segmentation of an image.

According to one aspect disclosed herein, there is provided a computer-implemented method comprising: receiving an image including an object depicted in the image; obtaining initial segmentation data defining segmentation of the image, the initial segmentation data comprising a first contour around the object; rendering the image and the first contour on a user display; and providing a user-interface tool enabling a user to refine the first contour to define a refined line replacing a part of the first contour to thereby form a second contour around the object. Using this tool, the user can draw a user-drawn line on the rendered image and the refined line comprises at least the user-drawn line. The method further comprises rendering the second contour on the image in place of the first.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

Brief Description of the Drawings

To assist understanding of embodiments of the present disclosure and to show how such embodiments may be put into effect, reference is made, by way of example only, to the accompanying drawings in which:

Figure 1 is a schematic block diagram of a system for segmenting an image,
Figure 2 is a flow chart of a method of segmenting an image,
Figures 3A to 3E illustrate an example process for segmenting an image, and
Figures 4 to 9 illustrate example tools for refining the segmentation of an image.

Detailed Description of Embodiments

The present disclosure relates to user driven refinement of a 2D image segmentation. It provides a simple interaction tool for users to make modifications of closed segmentations. For example a user can utilise the tool to start at a point on the contour of a segmentation and brush the area the user wishes to refine. The tool allows the user to perform a refinement based on image information without having to redraw the entire contour. It also introduces a very simply user interaction that best meets the user's expectations when trying to make complex refinements of segmentations. This interaction allows for refinements that meet the users' expectations of the outcome the majority of times.

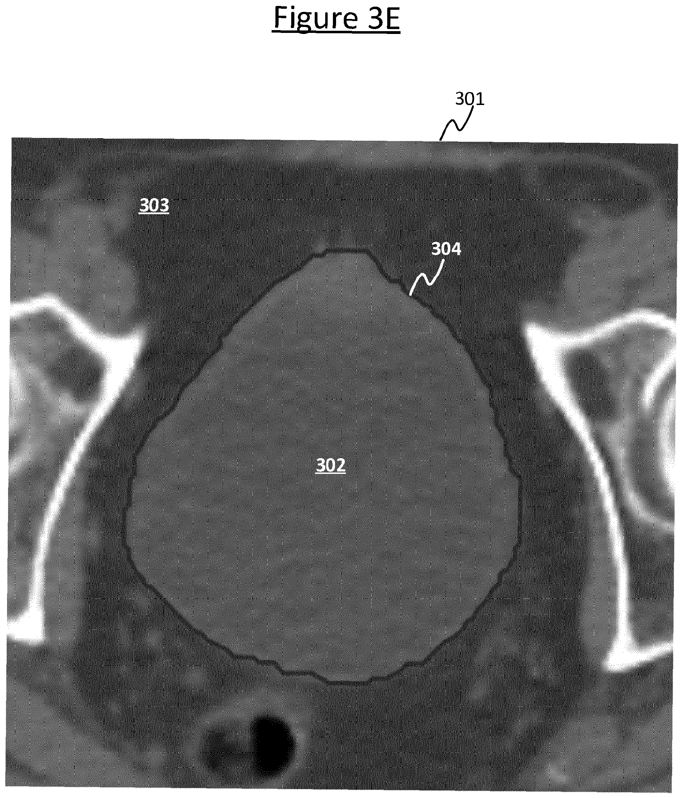

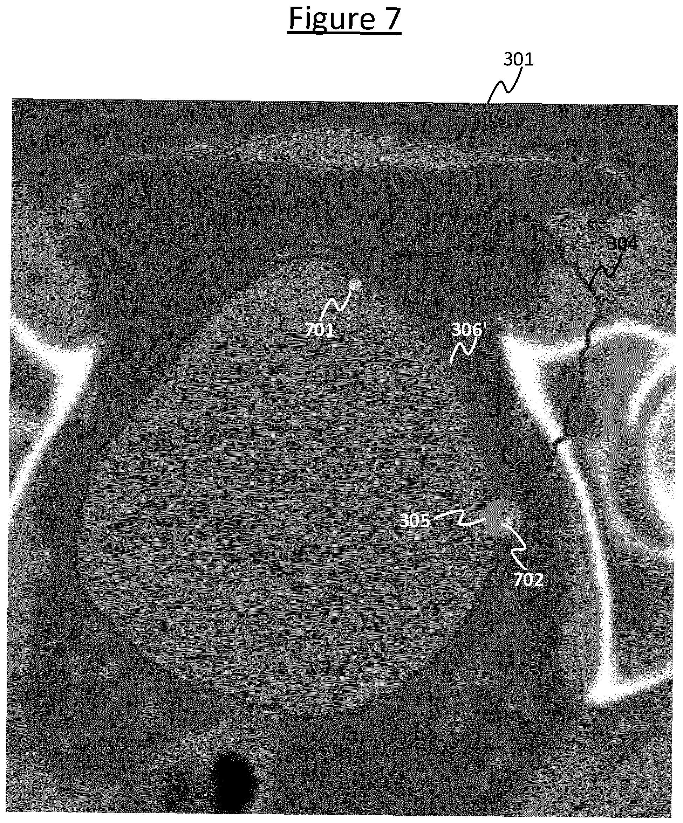

Figure 7, to be discussed in more detail later, demonstrates an example where the user has made a mistake, and attempts to refine the segmentation by starting at one edge of the contour, and brushing to another edge. This then refines the segmentation and produces the result that would have been expected, as shown in Figure 3E.

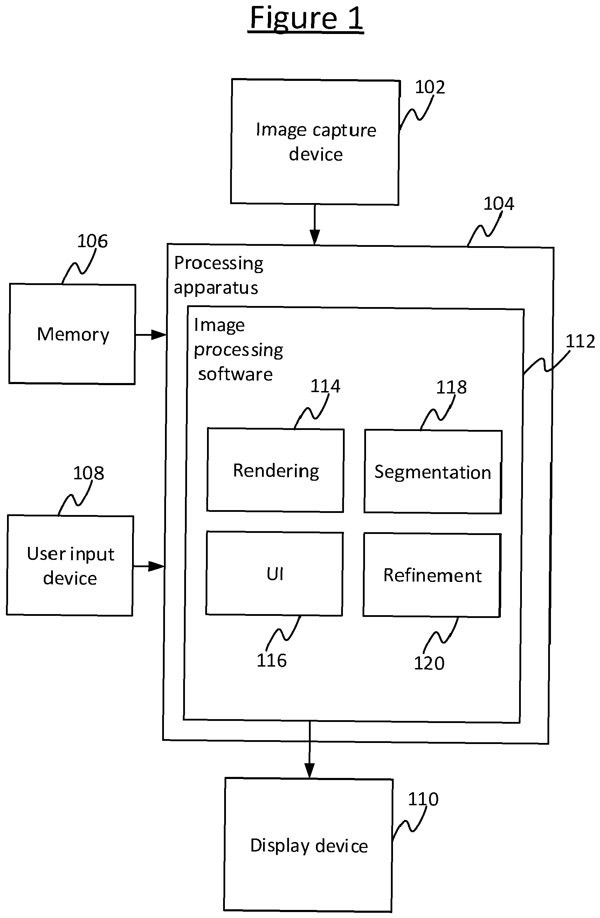

Figure 1 gives a block diagram of an example system for implementing the techniques disclosed herein. The system comprises an image capture device 102, processing apparatus 104, memory 106, user input equipment 108 and a display device 110. Each of the image capture device 102, memory 106, user input equipment 108 and display device 110 is operatively coupled to the processing apparatus 104.

The image capture device 102 may for example take the form of a still-image camera, video camera, or a medical scanner such as an X-ray camera, magnetic resonance imaging (MRI) scanner, computed tomography (CT) scanner, positron emission tomography (PET) scanner, ultrasound scanner etc. It is configured to capture an image which may be a stand-alone 2D image, a 3D image comprising a stack of 2D images through a volume, or a video image comprising a series of 2D frames. Whatever form the images takes, the image capture device 103 is arranged to provide the captured image to the processing apparatus 104. The image may be stored a region of the memory 106 and accessed by the processing apparatus 104 via the memory 106. It will be appreciated that the arrangement shown in Figure 1 is somewhat schematised.

The processing apparatus 104 comprises one or more processing units implemented in one or more dies, IC (integrated circuit) packages and/or housings at one or more geographic sites. The memory 106 comprises one or more memory units implemented in one or more memory media in one or more housings at one or more geographic sites. The memory unit(s) may or may not be incorporated in the same housing(s) as the processing units(s). Where required, distributing storage and/or computing techniques are known in the art. For instance, multiple processing units and/or memory units could be networked together via a network such as a local area network (e.g. within a building such as a hospital) and/or a wide area network or internetwork such as the Internet. Alternatively the processing apparatus 104 and/or memory 106 could all be integrated into the same housing of the same computer terminal.

Either way, each of the one or more processing units may take any suitable form known in the art, e.g. a general purposes central processing unit (CPU), or a dedicated form of coprocessor or accelerator processor such as graphics processing unit (GPU), digital signal processor (DSP), etc. Each of the one or more processing units may comprise one or more cores. Each of the one or more memory units may employ any suitable storage medium known in the art, e.g. a magnetic storage medium such as a hard disk drive, magnetic tape drive etc.; or an electronic storage medium such as a solid state drive (SSD), flash memory or EEPROM, etc.; or an optical storage medium such as an optical disk drive or glass or memory crystal based storage, etc. Where it is said herein that some item of data is stored in memory 106 or a region thereof, this may mean stored in any part of any one or more memory devices making up the memory 106. Where it is said that software is run on the processing apparatus, this mean may run on any one or more processing units making up the processing apparatus 104.

The user input equipment 108 may comprise any one or more suitable input devices for known in the art for receiving inputs from a user. In embodiments it comprises at least one pointing device that enables the user to draw in an image rendered in the display 110, such as a mouse, stylus, touchscreen, trackpad and/or trackball. Alternatively or additionally, the user input equipment 108 may comprise one or more other input devices such as a keyboard or voice control means. Where reference is made herein to receiving an input from the user through the user input equipment 108, this may mean through any one or more user input devices making up the user input equipment 108. The user input device(s) may or may not be incorporated into the same housing(s) as the processing unit(s) of the processing apparatus 104.

The display device 110 may take any suitable form for outputting images, such as an LED screen, LCD (liquid crystal display), plasma screen, electric ink display, or a traditional cathode ray tube. In embodiments, optionally it may take the form of a touchscreen and thus also form at least part of the user input equipment 108. The touchscreen may enable inputs by via being touched by the user's finger and/or using a stylus. The display device 110 may or may not be incorporated into the same housing(s) as the processing unit(s) of the processing apparatus 104.

The system further comprises image processing software 112 comprising a rendering module 114, UI (user interface) module 116, a segmentation module 118 and a refinement module 120. The image processing software 112, including each of these modules 114, 116, 118, 120, is implemented in the form of software code stored in the memory 106 and arranged to run on the processing apparatus 104. The modules of code 114, 116, 118, 120 are configured so as when thus run to perform the various operations related to, respectively: rendering images on the display 110, enabling the user to interact with the images by means of one or more UI tools such as brush tool, segmenting the image, and refining the segmentation.

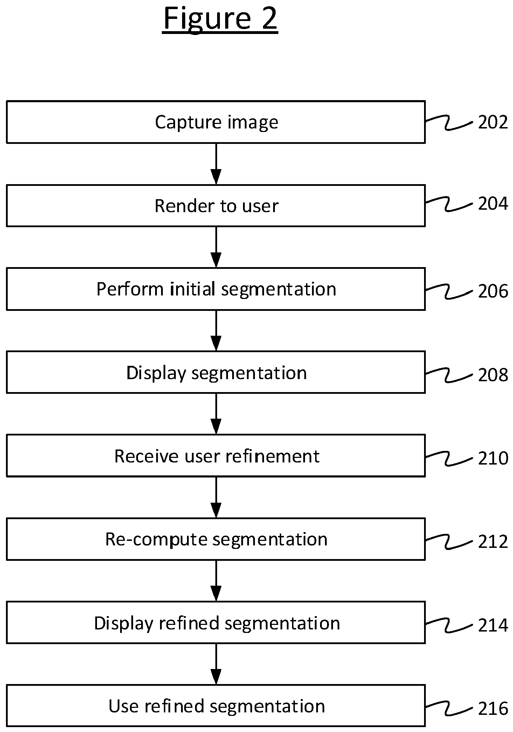

Figure 2 gives a flow chart of a method in accordance with embodiments disclosed herein. The method begins at step 202 with capturing a 2D or 3D image via the image capture device 102. The captured image is provided to the processing apparatus 104 for processing. This may comprise storing the captured image in memory 106, and the processing may comprise processing the stored image from memory 106. At step 204, the rendering module 114 run on the processing apparatus 104 renders the captured image to the user through the display device 110. At step 206, the segmentation module 118 performs an initial segmentation of the image into at least one foreground object and a background region.

The segmentation comprises determining a contour around the object, as will be discussed in more detail shortly. For the present purposes a "contour" means an outline around the full perimeter of the object. The segmentation may be performed in a full automaticity manner, or in a partially automated manner based on user inputs received from the user, or in a completely manual fashion based on user inputs input from the user. Any such user inputs are received through the user input equipment 108 via the UI module 116. At step 208 the rendering module 114 outputs the contour determined by the segmentation module 118 through the display 110.

At step 210 the UI module 116 receives a user input from the user through the user input equipment 108 in order to refine the contour that was initially determined by the segmentation module 118. In accordance with the present disclosure, this comprises the user re-drawing a part of the contour, e.g. using a brush tool as will be discussed in more detail shortly. At step 212 the refinement module 120 re-computes the contour based on the user input received via the UI module 116 through the user input equipment 108. At step 214 the rendering module 114 outputs the re-computed contour determined by the refinement module 120 through the display 110.

At step 216 the method may comprise using the segmentation for a practical application. This may comprise targeting a process on the segmented foreground object, or targeting a process away from the segmented foreground object, either in the image or in the real world. For instance if the image is a medical scan and the object is a tumour, step 216 may comprise targeting a radiotherapy treatment on the tumour in the subject's body. Or if the object is an organ, step 216 may comprise targeting the radiotherapy treatment away from that organ.

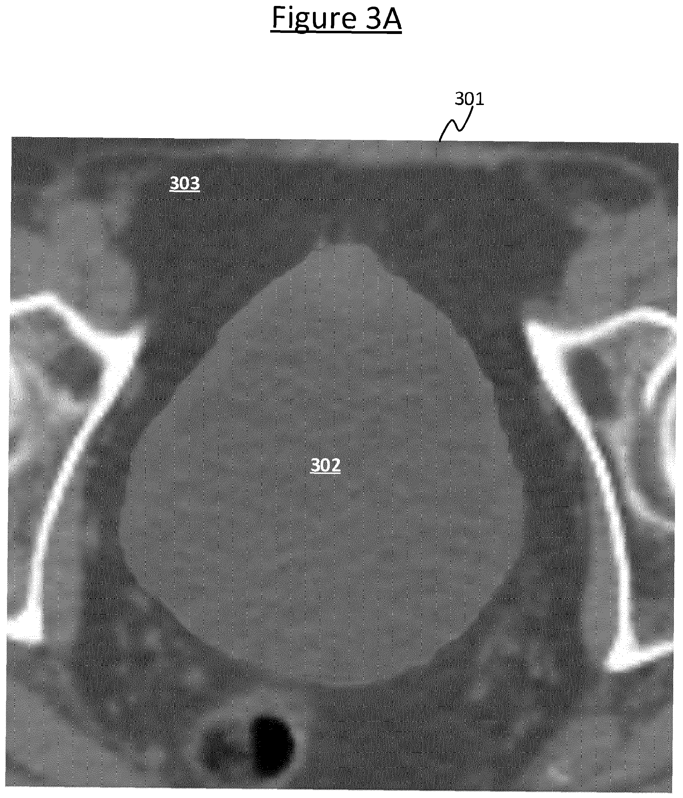

Figures 3A to 3E illustrate a method for the initial segmentation of a segmentation of the image as may be performed at step 206, for example. The method is performed by the segmentation module 118 based on user inputs received from a user through the user input equipment 114, using a UI tool provided by the UI module 116. It will be appreciated that the particular image shown in Figures 3A to 3E is just given by way of illustration and is not limiting.

Figure 3A shows the captured image without segmentation, e.g. as initially captured at step 202 and displayed at step 204. The image comprises an (as-yet unsegmented) object 302, and a background region 303 outside the object 302. In this example the image is a medical scan through the pelvis and the object 302 is the bladder.

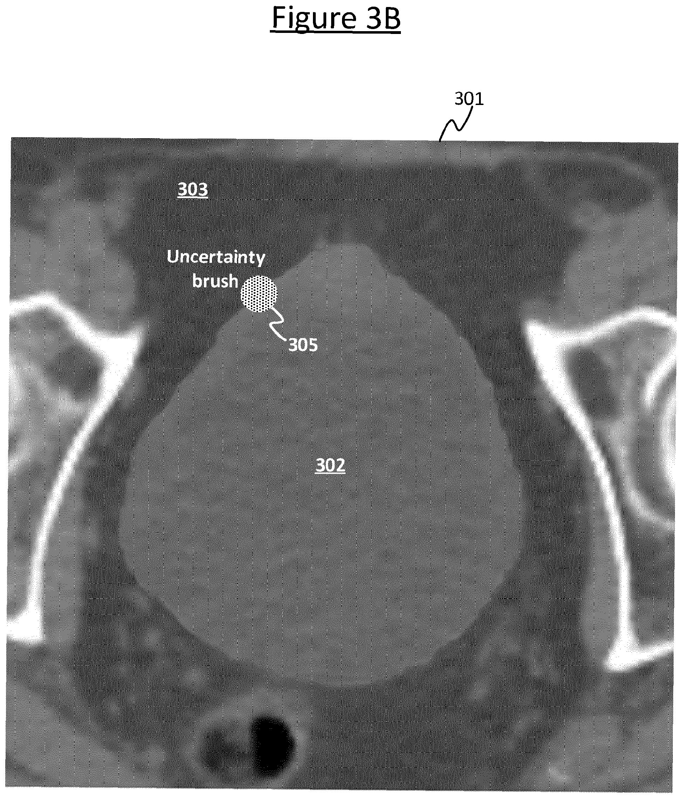

Figure 3B illustrates an example of the UI drawing tool 305 that may be provided by the UI module 116. In this case the tool 305 takes the form of a brush tool referred to herein as an "uncertainty brush". A brush tool is a drawing tool having a finite (non-zero) width or area, i.e. a non-pointlike tool, larger than a single point or pixel.

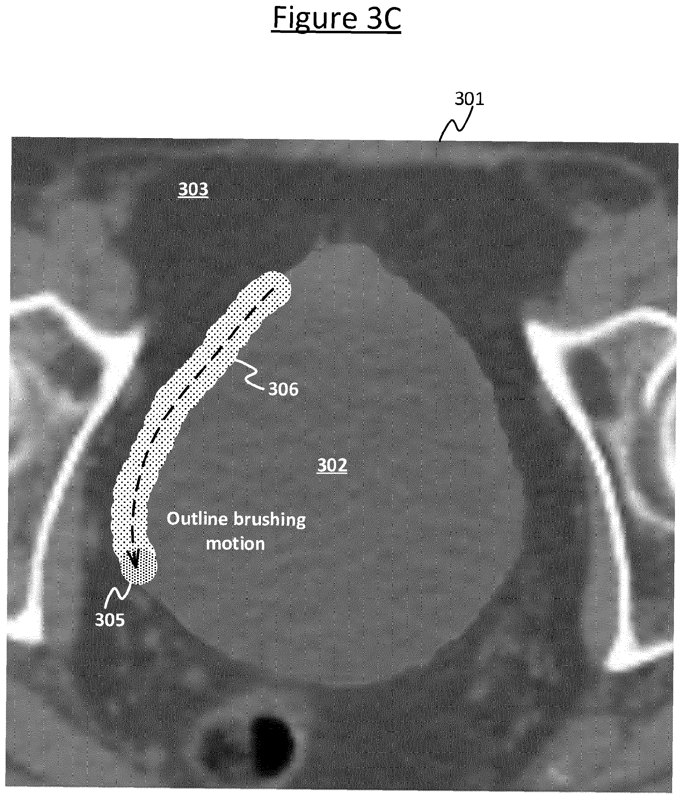

Figure 3C illustrates the use of the uncertainty brush 305. The user uses the uncertainty brush tool 305 to brush a region of uncertainty 306 around the perimeter of the object 302, e.g. using a mouse in a point-and-click interface, or a finger or stylus on a touch screen. The brush tool 305 leaves behind a trail in the form of a region of uncertainty 306 superposed on the image everywhere it is brushed.

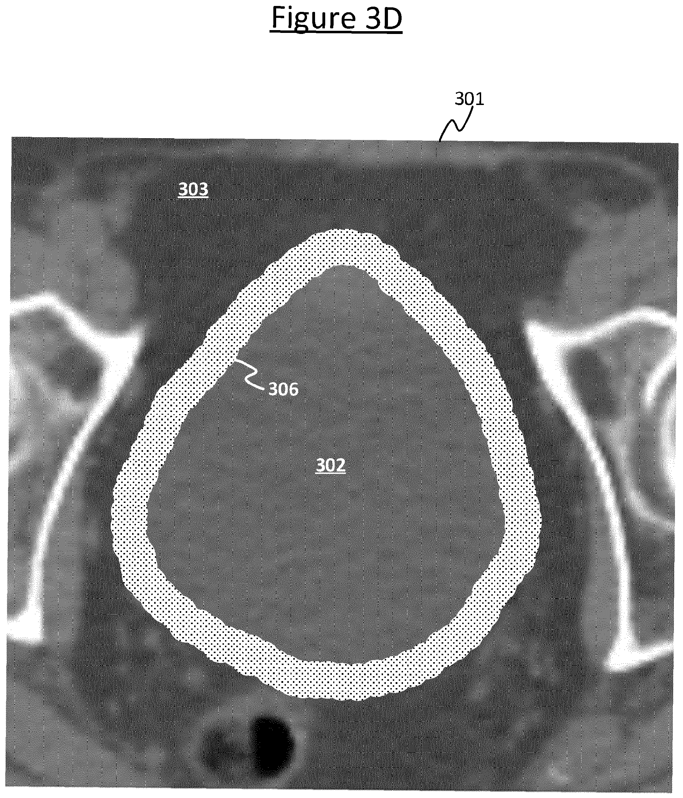

Figure 3D shows the situation once the user has brushed around the whole perimeter of the object 302. The region of uncertainty 306 thus forms a complete loop around the object 302, the loop having a finite width (wider than a line).

The region of uncertainty 306 defines a region that could be either be foreground or background. The segmentation module 118 automatically classifies the region outside of the loop formed by the region of uncertainty 306 as known background, the region inside loop formed by the region of uncertainty 306 as known foreground, and the area of region of uncertainty itself 306 as to-be-determined (currently unknown). For instance this may be implemented by determining a pixel mask over the image, where each pixel outside the loop defined by the region of uncertainty 306 is mapped to a first value (e.g. 1) indicating background 303, each pixel inside the loop defined by the region of uncertainty 306 is mapped to a second value (e.g. 0) indicating foreground 302, and each pixel in the region of uncertainty 306 itself is mapped to a third value indicating uncertainty.

Figure 3E shows the resulting segmentation, comprising a contour (i.e. outline) 304 that is determined automatically by the segmentation module 118 based on the classified foreground region 302, background region 303 and region of uncertainty 306. This may be determined based on geodesic distance.

To elaborate, the segmentation module automatically scans through each of a plurality of points within the region of uncertainty 305 (e.g. each pixel labelled as such in the mask). For each such point (e.g. each pixel), it computes a shortest geodesic distance to the background 303 and a shortest geodesic distance to the foreground 302. Whichever of these is shortest determines whether the uncertainty point (e.g. pixel) in question is reclassified as foreground or background: if the shortest geodesic distance to the foreground 302 is shortest it is reclassified from uncertain to foreground, but if the shortest geodesic distance to the background 303 is shortest then it is reclassified from uncertain to background.

The shortest geodesic distance from a point (e.g. pixel) in the region of uncertainty 305 to the background 303 may be determined by comparing the geodesic distances from the point to a plurality of candidate points (e.g. pixels) in the background 303 (i.e. the region already classified as known background). For the sake of efficiency it is not necessary to compare the distance to every possible point in the background 303. Note therefore that the shortest geodesic distance to the background 303, for the present purposes, means the shortest of those compared.

Similarly, the shortest geodesic distance from a point (e.g. pixel) in the region of uncertainty 305 to the foreground 302 may be determined by comparing the geodesic distances from the point to a plurality of candidate points (e.g. pixels) in the foreground 302 (i.e. the region already classified as known foreground). For the sake of efficiency it is not necessary to compare the distance to every possible point in the foreground 302. Note therefore that the shortest geodesic distance to the foreground 302, for the present purposes, means the shortest of the compared paths.

E.g. the segmentation could compare the distances only to foreground and background pixels in a limited candidate region around the region of uncertainty 306, and/or could compare the distances only to every nth pixel in the foreground or background.

The geodesic distance is a measure of distance whereby the distance is weighted by one or more parameters, such as intensity, of each point or pixel in the image along a route between the point in question and the foreground or background. The concept of geodesic distance, in itself, is known in the art.

For instance, given an image $I$ defined on a 2D domain $\psi$, a binary mask M (with $M(x) \in [0,1] \forall x$) and foreground or background region $\Omega$ with $x \in \Omega \iff M(x) = 0$, the unsigned geodesic distance of each compared pixel or point x from $\Omega$ is defined as:

$$D(x; M, \nabla I) = \min_{\{x'|M(x')=0\}} d(x, x'), \text{ where} \qquad (1)$$

$$d(a, b) = \min_{\Gamma \in P_{a,b}} \int_0^1 \sqrt{||\Gamma'(s)||^2 + \gamma^2 (\nabla I \cdot u)} ds \qquad (2)$$

where x' is a pixel or point different to x; $P_{a,b}$ is the set of all considered paths between points a and b; and $\Gamma(s)$ :

$\mathfrak{R} \longrightarrow \mathfrak{R}^2$ indicates one such path, with s $\in[0, 1]$. The labels a and b are just different parameter names for defining d(x, x'). The two different notations are used because the above equation has two individual functions. The symbol V represents gradient and $|| ... ||$ is the magnitude. The spatial derivative $\Gamma'(s)$ is $\Gamma'(s) = \partial\Gamma(s)/\partial s$. The unit vector u = $\Gamma'(s)/||\Gamma'(s)||$ is tangent to the direction of the path. The factor y weights the contribution of the image gradient versus the spatial distances. The distance D in equation (1) reduces to the conventional Euclidean path length when $\gamma = 0$.

$I$ is a parameter representing the cost or weight of the path at each point, analogous to the height on a map. I.e. it is the property or attribute taken into account by the geodesic distance that distinguishes it from a mere linear (Euclidean) distance. In embodiments $I$ may for example be achromatic pixel intensity (e.g. luminance). However it could be another property such as a chrominance value; or the intensity of a red, green or blue (RGB) channel. As another possibility $I$ could be some other technical parameter of the MRI scan, CT scan or the like, indicating a property other than what is visible in the image itself, e.g. relating to the composition of the scanned matter. In some embodiment, $I$ could be a compound metric taking into account more than one of the above parameters. The parameter(s) or metric is/are a matter of design choice depending on the desired application.

Expressed another way, the geodesic distance may be defined as:

$$D(v) = \min \begin{cases} D(v) \\ D(v + \Delta_1) + \sqrt{\rho_{23} + \gamma\, (I(v) - I(v + \Delta_1))^2} \\ D(v + \Delta_2) + \sqrt{\rho_{22} + \gamma\, (I(v) - I(v + \Delta_2))^2} \\ D(v + \Delta_3) + \sqrt{\rho_{23} + \gamma\, (I(v) - I(v + \Delta_3))^2} \\ D(v + \Delta_4) + \sqrt{\rho_{22} + \gamma\, (I(v) - I(v + \Delta_4))^2} \\ D(v + \Delta_5) + \sqrt{\rho_{21} + \gamma\, (I(v) - I(v + \Delta_5))^2} \\ D(v + \Delta_6) + \sqrt{\rho_{22} + \gamma\, (I(v) - I(v + \Delta_6))^2} \\ D(v + \Delta_7) + \sqrt{\rho_{23} + \gamma\, (I(v) - I(v + \Delta_7))^2} \\ D(v + \Delta_8) + \sqrt{\rho_{22} + \gamma\, (I(v) - I(v + \Delta_8))^2} \\ D(v + \Delta_9) + \sqrt{\rho_{23} + \gamma\, (I(v) - I(v + \Delta_9))^2} \\ D(v + \Delta_{10}) + \sqrt{\rho_{12} + \gamma\, (I(v) - I(v + \Delta_{10}))^2} \\ D(v + \Delta_{11}) + \sqrt{\rho_{11} + \gamma\, (I(v) - I(v + \Delta_{11}))^2} \\ D(v + \Delta_{12}) + \sqrt{\rho_{12} + \gamma\, (I(v) - I(v + \Delta_{12}))^2} \\ D(v + \Delta_{13}) + \sqrt{\rho_{11} + \gamma\, (I(v) - I(v + \Delta_{13}))^2} \end{cases} \qquad (3)$$

where v is a pixel or point in the image, and p is a spacing scale for that direction. Regarding p, the reason for this is that if the image voxels are not squares, e.g. as in some medical images, then the spacing scale for a given direction is incorporated into the distance calculation to take account of this. For instance this may be implemented as follows.

```
private void CalculateSpacingScale<T>(Volume3D<T> volume)
{
    var zRatioSquared = volume.SpacingZ * volume.SpacingZ;
    _row11DistanceScale = volume.SpacingX * volume.SpacingX;
    _row12DistanceScale = _row11DistanceScale * 2;
    _row21DistanceScale = zRatioSquared;
    _row22DistanceScale = zRatioSquared + _row11DistanceScale;
} _row23DistanceScale = zRatioSquared + _row12DistanceScale;
```

For avoidance of doubt, the property *I* is of course taken from the image "underneath" or without the visible UI overlay of the trail of the region of uncertainty 306 as shown to the user in Figure 3C and 3D for example. This is just a graphical UI element to show the user where the region of uncertainty 306 is being painted. The graphical UI representation of the region of uncertainty 306 does not form part of the pixel values processed for determining the segmentation. Only the underlying pixel mask or classification mapped to the region of uncertainty is used in that computation.

Once the segmentation module 118 has reclassified all the processed points (e.g. every pixel) in the region of uncertainty 305 as either foreground of background, it can thus determine the contour (outline) 304 around the foreground object 302. If every pixel is reclassified, the contour 403 may simply be the outermost pixels of the foreground object 302 or the innermost pixels of the background region 303, or potentially a fit between the foreground and background regions 302, 303 (the contour 304 could be defined with a subpixel accuracy with each pixel being foreground or background depending on whether the majority of the area of that pixel falls inside or outside the foreground). If on the other hand the geodesic distance comparison was only performed for points representing a subset of the pixels in the region of uncertainty 305, then the contour 304 may be determined as a best fit between the processed points.

The method described with reference to Figures 3A to 3E thus provides a semi-automated process for segmenting an image. Note that this is only one example of a method of segmenting an image. In other embodiments, the initial segmentation to determine the contour 304 may be performed in a fully automated manner using an object recognition algorithm, e.g. as disclosed in US 10,235,605. In other embodiments, the initial segmentation may be performed in a fully manual manner, e.g. by the user using a manual line drawing tool (a point like tool rather than a brush tool having a finite width or area). By whatever means the segmenting is performed, the initial contour 304 may not turn out exactly as desired. Either the automated process or the automated part of the semi-automated process may not work properly, or the user may make a manual mistake in the fully manual method or the manual part of the semi-automated process.

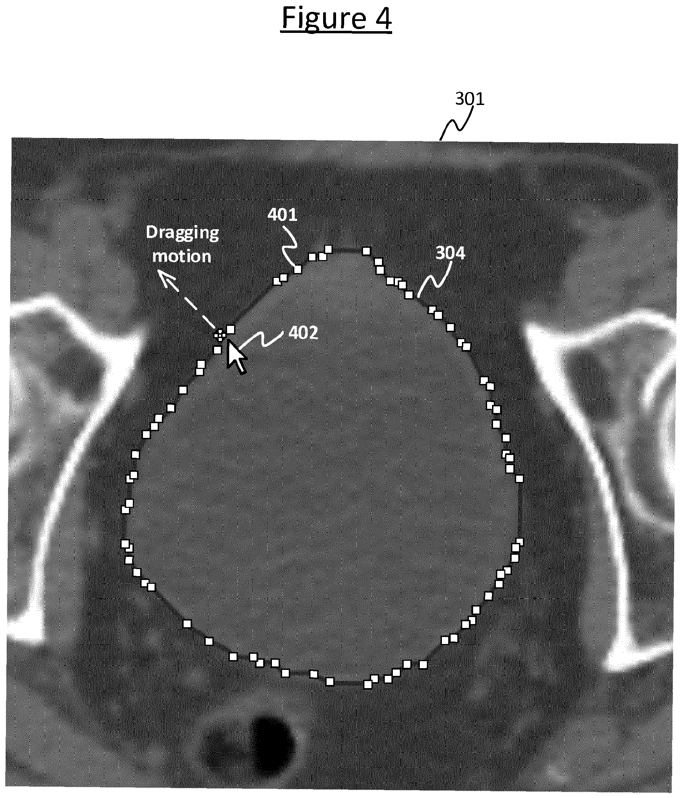

There are existing tools for refining a contour around an image. Figures 4 to 6 illustrate the principles behind known tools. For completeness, note that the exact graphical illustrations of Figures 4 to 6 are not captured directly from the published literature. Rather they are a representation of the known techniques created for the purpose of the present disclosure, based on the inventors' general background knowledge, artificially shown on the same image as Figures 3A to 3E and 7 to 9 by way of comparison with the presently disclosed techniques.

Figure 4 shows another known tool. Here the contour 304 takes the form of a polygon and a set of nodes 401 are rendered around the contour 304 at the vertices of the polygon. The user can then use a mouse pointer tool 402 to click-and-drag the nodes 401 in order to drag in or out the corresponding verifies of the polygon. This technique is known in general image processing packages. The inventors are not aware that it has been used before in a medical context, but it is shown here on the same image as Figures 3A-E and 7-9 by way of comparison with the presently disclosed techniques.

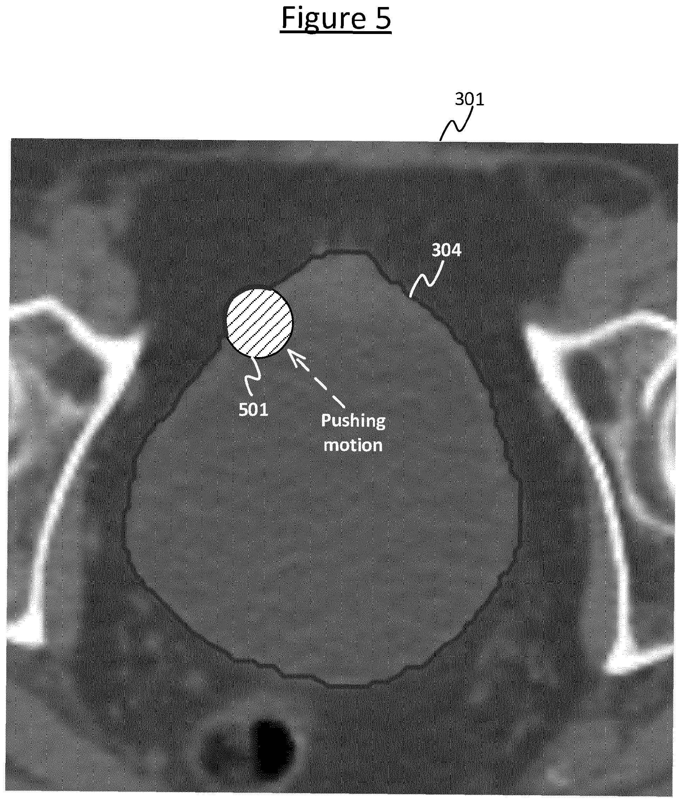

Figure 5 shows another known tool. Here the user is provide with a pushing tool 501. The user uses a user input device such as a mouse or stylus to place the pushing tool inside the object or foreground (within the contour 403), and then uses the tool 501 to push outwards on the contour. The contour 304 gets extended outward with the user's pushing motion. The tool of Figure 5 is a known tool for use in refining the segmentation of medical scans.

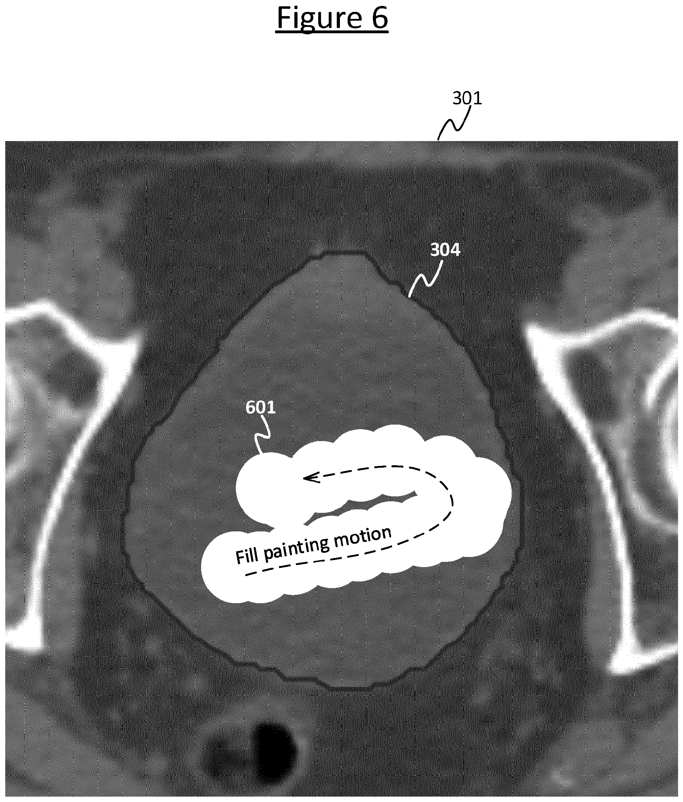

Figure 6 shows yet another known tool. Here the user has to use a paint brush tool 601 to repaint the entire foreground region. The new foreground 302 then becomes simply whatever region the user painted, and the new contour 304 is simply the outline around the user's newly painted region. The tool of Figure 6 is a known tool for use in refining the segmentation of medical scans.

These existing tools can be inaccurate and awkward to use, and thus to not always produce the result that the user intended or expected. The painting tool is very inaccurate and labour intensive. The pushing and dragging tools are less labour intensive but the accuracy with which the user can control the outline is not great, and it may still not always be possible for the user to recreate the correct or desired outline. They are also still somewhat more awkward to use than then could be.

It would be desirable to provide an alternative tool for refining the segmentation of an image.

Figure 7 illustrates the operation of a refinement tool in accordance with embodiments disclosed herein, e.g. at steps 210-214. The refinement may be implemented by the refinement module 120 based on inputs received through the user input equipment 108 using a UI tool provided by the UI module 116.

For the sake of illustration, consider a scenario where the initial segmentation 206 performed by the segmentation module 118 resulted in the erroneous contour 304 shown in Figure 7, rather than the correct one shown in Figure 3E. The disclosed tool enables the user to correct this, e.g. to get the contour as shown in Figure 3E, by drawing on the image and thus defining a user drawn-line defined in an at least partially manual fashion, to replace part of the initial contour. The user draws between a start point 701 and an end point 702, and thus defines a line to replace a segment of the existing contour 304.

In embodiments, the user does this by using a brush tool to brush a new region of uncertainty 306' between the start point 701 and end point 702. Advantageously, in certain embodiments this may be the same brush tool 305 that was used to perform the initial segmentation 206. The method thus provides an efficient and intuitive way to correct the segmentation. The process then works exactly as described previously in relation to Figures 3A-E, but processing points (e.g. every pixel) within only the newly brushed-on region of uncertainty 306' around only part of the perimeter of the object 302, rather than the full perimeter as in Figure 3D. Once the user has brushed on this region 306', the points (e.g. every pixel) within the new region of uncertainty 306' are reclassified as uncertain. Points not in this new region of uncertainty 306' retain their initial classification as either known foreground or background from the initial segmentation step 206. In embodiments this may comprise defining a new pixel mask for the image, in which the pixels in the new region of uncertainty 306' are relabelled with the third value representing uncertainty, but the other pixels stay labelled with their previous first or second values (e.g. 0 and 1) representing known background and foreground. Note therefore that points or pixels that were previously classified as "known" foreground or background (for the purpose of the initial segmentation 206) may now be reclassified as uncertain.

The refinement module 120 may then use the same or a similar geodesic distance algorithm to reclassify the points or pixels under consideration in the new region of uncertainty 306' as foreground or background again. I.e. it scans through each point under consideration (e.g. every pixel), and for each determines a shortest geodesic distance to the known foreground 302 (according to the current mask or classification) and a shortest geodesic distance to the known background 302 (again according to the current mask or classification). If the shortest geodesic distance to the foreground 302 is shorter than the shortest geodesic distance to the background 303, then the point/pixel in question is classified as foreground; whereas if the other way around, the point/pixel in question is classified as background.

In practice, the refinement module 120 may comprise some of the same code as the segmentation module 118, and it will be appreciated that the diagram shown in Figure 1 is somewhat schematized.

Considering the example of Figure 7 by way of illustration, note that a "user-drawn line" does not necessarily mean that the line is drawn completely manually. Rather, in embodiments, it is drawn in a partially manual manner where the user uses a brush with a non-pointlike width or area to draw a wider region 306' encompassing the area where the new line will be determined, and the new line is then automatically determined by the refinement module 120 within the region 306' drawn by the user.

Nonetheless, in other embodiments, it is not excluded that the new line replacing part of the initial contour 304 could be drawn completely manually using a point-like drawing tool (as opposed to a brush).

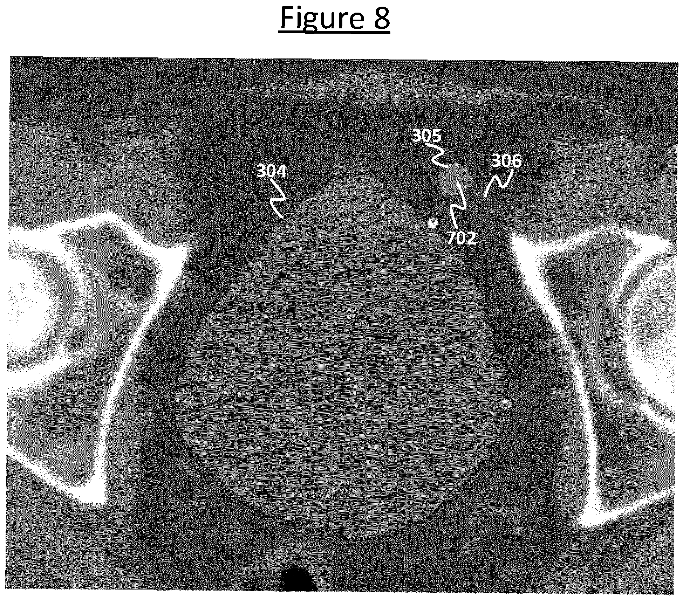

In embodiments, the user starts on the edge of an existing contour 304. The user then will "brush" to an arbitrary point on the image. The end point 702 does not need to be a point on the existing contour 304, however. Instead a line may be automatically calculated from the end point 702 of the user interaction to the closest point on the contour the user has been interacting with. For instance this may be calculated by computing the distance from the end user interaction point to each point on the contour, e.g. the direct linear distance based on Pythagoras' theorem ($x^2 + y^2 = z^2$), as opposed to geodesic distance. Figure 8 demonstrates an end point not on the contour but joining up to the closest point.

As computing the closest point on the contour to the end point can be computational expensive, embodiments may optionally employ one or more efficiencies to improve performance. A first of these is not calculating the square root of the results, and instead ordering distances by $x^2 + y^2$. The closest point will be the smallest result regardless of square root. A second possibly efficient is to not compute every point on the contour to the end point, but skipping a number of points based on the size of the contour. This will result in an approximation of the closest point, but the larger the contour size, the less this approximation will affect the result.

In a variant of the above, the distance from the user's endpoint to the contour 304 could instead be determined based on geodesic distance. In this case the line connecting the user's endpoint to the initial contour 304 would be the shortest geodesic distance from the user's endpoint to the initial contour.

In embodiments the user is constrained to starting the user-drawn line at a point 701 on the initial contour 304 as determined by the segmentation module 118 at step 206.

Alternatively a similar technique as described above could be used to allow the user's start point 701 to start away from the initial contour 304, as well as the endpoint 702. In other embodiments, the user's start point could be allowed to start away from the initial contour but the endpoint may be constrained to ending on the initial contour, or the user could be constrained to both starting and ending on the initial contour.

The refinement module 120 determines a refined line segment that replaces part (but not all) of the initial contour 304 that was determined by the segmentation module 118 in the initial segmentation step 206. As described, the refined, replacement line segment may consist of only a user-drawn line, or it may be made up of both a user-drawn line and one or more automatically-generated connecting lines connecting between the start and/or endpoints of the user's line and the initial contour 304.

The refinement module 120 may also reclassify which region of the image is classified as foreground object 302 and which is the background image 303.

Note that the scenario shown in Figure 7 in fact has two possible solutions: in principle, the user could have intended to keep the loop or lobe in the upper left, and classify this smaller region as foreground; excluding the larger line around the bladder and classifying the larger, bladder region as background. Whereas of course in practice the user intended to keep the larger loop around the bladder as the contour 304 and classify the region within this, the bladder 302, as foreground; excluding the smaller, erroneous loop in the top right and classifying this area as background 303 along with the rest of the border areas of the image. There are a variety of ways the refinement module 120 may be configured to deal with this potential ambiguity.

In embodiments, the refinement module 120 could simply be configured to determine both solutions and present both to the user. As a variant of this, the refinement module 120 may provide the user with an option, via the UI module 116, to select which of the two solutions to accept. In other embodiments the refinement module 120 may be configured to automatically select between the two possible solutions. In such embodiments, the refinement module 120 may provide the user with an option, via the UI module 116, to switch to the other solution if the automatically-selected solution was not what was intended by the user.

As one possible way for the refinement module to make an automatic selection 120 is to compute and compare the foreground area within the new contour 304 for both solutions, and select as the intended solution the one that has the larger foreground area (or equivalently if there is only one object being segmented, compute and compare the area of the background region for both solutions and select that which has the smaller background region). As another example for making the selection, the refinement module 120 could select which solution is likely to have been intended based on a history of user interactions in the current and/or past images. For example, in the case where the initial segmentation 206 was performed in an at least partially manual fashion, the refinement module 120 could select as foreground the region that was closest to the user's originally drawn contour 304 or brushstroke in the same image. Or it could make the section based on a history of manual image segmentations and/or refinements made in previous images, e.g. using a machine learning algorithm such as a neural network. A combination of the above approaches could also be used.

The following describes an example algorithm for making the automatic selection between the two possible solutions based on area. After a start point and end point on the contour have been computed, next the algorithm calculates what the user was attempting to accomplish with the brush stroke. As discussed, this type of user interaction may be ambiguous to a computer algorithm, and therefore in such embodiments, the algorithm must calculate which contour shape (i.e. outline) is expected by computing two sets of possible contours. The first contour starts from either of the brush interaction start or end points. The algorithm then walks the edge of the contour in a clockwise direction to either the start or end brush interaction point. The other possible contour begins at the same point, but walks the edge of the contour in an anti-clockwise direction until it reaches the same end point.

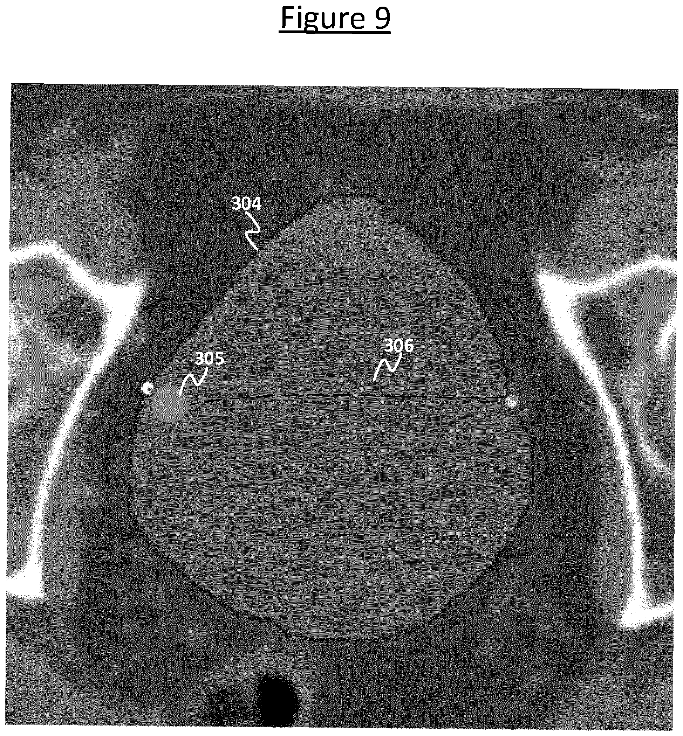

Once the two contours have been created, the algorithm calculates the size of each computed area within the contour by counting the number of pixels or voxels within each closed contour. The resulting segmentation is selected as the largest of these two areas. This works for many different use cases, some that are very ambiguous even when the user intended a specific behaviour (such as drawing a line in the middle of an existing contour as shown in Figure 9).

A minor edge case is also introduced in this algorithm when the start and end point are the same (or within x pixels or each other). In this case, the user has created a new closed contour (outline), and therefore the algorithm assumes this was the expected shape. In this case, the algorithm first calculates whether all the interaction points exist completely within the existing segmentation. If true, the existing segmentation is replaced entirely with the result of the new interaction. If some or all points exist outside of the existing contour, the algorithm assumes the user is appending to the existing contour. Therefore, both contours are merged together, and a new contour is extracted from the outer region of the merged result.

It will be appreciated that the above embodiments have been described by way of example only.

More generally, according to one aspect disclosed herein, there is provided a computer-implemented method comprising: receiving an image including an object depicted in the image; obtaining initial segmentation data defining segmentation of the image, the initial segmentation data comprising a first contour around the object; rendering the image and the first contour on a user display; providing a user-interface tool enabling a user to refine the first contour to define a refined line replacing a part of the first contour to thereby form a second contour around the object, wherein the user uses said tool to draw a user-drawn line on the rendered image and the refined line comprises at least the user-drawn line; and rendering the second contour on the image in place of the first.

In embodiments, the line drawn by the user may end at a point not on the first contour, and the method may comprise automatically determining an automatically-determined line between the end point and the first contour, the refined line comprising the user-drawn line and the automatically-determined line.

In some such embodiments, the automatically determined line may be the shortest linear distance between the endpoint and the first contour. Alternatively it could be another path such as the shortest linear distance between the endpoint and the first contour

In embodiments, the user-interface tool may require the user to start the user-drawn line at a point on the first contour.

In embodiments, inside of the first contour may be classified as an initial foreground region of the image and outside of the first contour may be classified as an initial background region of the image. The user-interface tool may comprise a brush tool whereby the drawing of the user-drawn line comprises:

- the user using the brush tool to paint a new region of uncertainty in the image, thereby leaving a newly known foreground region and a newly known background region comprising the initial foreground and background regions respectively excluding the new region of uncertainty; and
- for each respective one of a plurality of points in the new region of uncertainty, automatically: determining a respective foreground distance being a shortest geodesic distance between the respective point and the newly known foreground, determining a respective background distance being a shortest geodesic distance between the respective point and the newly known background, and classifying the respective point as refined foreground if the respective foreground distance is shorter than the respective background distance, but classifying the respective point as refined background if the respective background distance is shorter than the respective foreground distance;
- wherein the user-drawn line is determined by a boundary between the points classified as refined foreground and refined background.

In some such embodiments, said plurality of points may be every pixel in the new region of uncertainty. Alternatively it could be a selection of points within the new region of uncertainty.

In alternative embodiments the user-drawn line could simply be drawn directly by the user using a point-like drawing tool, in a fully manual fashion.

In embodiments, said obtaining of the initial segmentation data may comprise generating the first contour at least partially automatically.

In some such embodiments, the first contour may be determined by:

- the user using the brush tool to paint an initial region of uncertainty in the image around the object, thereby defining inside the initial region of uncertainty as preliminarily known foreground and outside the initial region of uncertainty as preliminarily known background; and

- for each respective one of a plurality of points in the initial region of uncertainty, automatically: determining a respective foreground distance being a shortest geodesic distance between the respective point and the preliminarily known foreground, determining a respective background distance being a shortest geodesic distance between the respective point and the preliminarily known background, and classifying the respective point as initial foreground if the respective foreground distance is shorter than the respective background distance, but classifying the respective point as initial background if the respective background distance is shorter than the foreground;
- wherein the first contour is determined by a boundary between the points classified as initial foreground and initial background.

Said plurality of points in the initial region of uncertainty may be every pixel in the initial region of uncertainty. Alternatively it could be a selection of points within the initial region of uncertainty.

In some particular embodiments of the above, the refinement may be performed using the same brush tool as used to determine the first contour.

In alternative embodiments, the determination of the first contour may be performed in a fully automated manner using a machine learning based object recognition algorithm, such as disclosed in US 10,235, 605.

As another alternative, the first contour could simply be drawn in a fully manual fashion using a point-like drawing tool.

In embodiments, the method may comprise automatically selecting between two possible solutions for which part of the first contour is replaced by the refined line to replace the second contour, based on one or both of:

- which of the two solutions results in a larger area inside the second contour, and/or
- a history of previous user interactions.

In some such embodiments, the method may comprise providing a user option to switch to the solution other than the automatically selected solution.

In example applications, the image may be a 2D slice through a 3D image.

In one example application, the image may comprises a scan of at least part of a body of a living being and the object is an organ or tumour within said body

According to another aspect disclosed herein, there is provided a computer program embodied on computer-readable storage and configured so as when run on one or more processors to perform the method in accordance with any embodiment disclosed herein.

According to another aspect, there is provided a system comprising: memory comprising one or more memory devices, and processing apparatus comprising one or more processing units; wherein the memory stores code arranged to run on the processing apparatus, the code being configured so as when run to perform a method according to any embodiment disclosed herein.

Other variants or use cases of the disclosed techniques may become apparent to the person skilled in the art once given the disclosure herein. The scope of the disclosure is not limited by the described embodiments but only by the accompanying claims.

## Claims

1.    A computer-implemented method comprising:

receiving an image including an object depicted in the image;
obtaining initial segmentation data defining segmentation of the image, the initial segmentation data comprising a first contour around the object;
rendering the image and the first contour on a user display;
providing a user-interface tool enabling a user to refine the first contour to define a refined line replacing a part of the first contour to thereby form a second contour around the object, wherein the user uses said tool to draw a user-drawn line on the rendered image and the refined line comprises at least the user-drawn line; and
rendering the second contour on the image in place of the first.

2.    The method of claim 1, wherein the line drawn by the user ends at a point not on the first contour, and the method comprises automatically determining an automatically-determined line between the end point and the first contour, the refined line comprising the user-drawn line and the automatically-determined line.

3. The method of claim 2, wherein the automatically determined line is the shortest linear distance between the endpoint and the first contour.

4. The method of claim 2 or 3, wherein the user-interface tool requires the user to start the user-drawn line at a point on the first contour.

5. The method of any preceding claim, wherein inside of the first contour is classified as an initial foreground region of the image and outside of the first contour is classified as an initial background region of the image, and wherein the user-interface tool comprises a brush tool whereby the drawing of the user-drawn line comprises:

- the user using the brush tool to paint a new region of uncertainty in the image, thereby leaving a newly known foreground region and a newly known background region comprising the initial foreground and background regions respectively excluding the new region of uncertainty; and
- for each respective one of a plurality of points in the new region of uncertainty, automatically: determining a respective foreground distance being a shortest geodesic distance between the respective point and the newly known foreground, determining a respective background distance being a shortest geodesic distance between the respective point and the newly known background, and classifying the respective point as refined foreground if the respective foreground distance is shorter than the respective background distance, but classifying the respective point as refined background if the respective background distance is shorter than the respective foreground distance;
- wherein the user-drawn line is determined by a boundary between the points classified as refined foreground and refined background.

6. The method of claim 5, wherein said plurality of points is every pixel in the new region of uncertainty.

7. The method of any preceding claim, wherein said obtaining of the initial segmentation data comprises generating the first contour at least partially automatically.

8. The method of claim 7, wherein the first contour is determined by:

- the user using the brush tool to paint an initial region of uncertainty in the image around the object, thereby defining inside the initial region of uncertainty as preliminarily known foreground and outside the initial region of uncertainty as preliminarily known background; and
- for each respective one of a plurality of points in the initial region of uncertainty, automatically: determining a respective foreground distance being a shortest geodesic distance between the respective point and the preliminarily known foreground, determining a respective background distance being a shortest geodesic distance between the respective point and the preliminarily known background, and classifying the respective point as initial foreground if the respective foreground distance is shorter than the respective background distance, but classifying the respective point as initial background if the respective background distance is shorter than the foreground;
- wherein the first contour is determined by a boundary between the points classified as initial foreground and initial background.

9. The method of claim 8 as dependent on claim 5 or 6, wherein the refinement is performed using the same brush tool as used to determine the first contour.

10. The method of any preceding claim, comprising automatically selecting between two possible solutions for which part of the first contour is replaced by the refined line to replace the second contour, based on one or both of:

- which of the two solutions results in a larger area inside the second contour, and/or
- a history of previous user interactions.

11. The method of claim 10, comprising providing a user option to switch to the solution other than the automatically selected solution.

12. The method of any preceding claim, wherein the image is a 2D slice through a 3D image.

13. The method of any preceding claim, wherein the image comprises a scan of at least part of a body of a living being and the object is an organ or tumour within said body

14. A computer program embodied on computer-readable storage and configured so as when run on one or more processors to perform the method of any preceding claim.

15. A system comprising:

- memory comprising one or more memory devices, and
- processing apparatus comprising one or more processing units;

wherein the memory stores code arranged to run on the processing apparatus, the code being configured so as when run to perform the method of any of claims 1 to 13.

# Figure 1

# Figure 2

| Capture image | ∿ 202 |
| Render to user | ∿ 204 |
| Perform initial segmentation | ∿ 206 |
| Display segmentation | ∿ 208 |
| Receive user refinement | ∿ 210 |
| Re-compute segmentation | ∿ 212 |
| Display refined segmentation | ∿ 214 |
| Use refined segmentation | ∿ 216 |

# Figure 3A

# Figure 3B

# Figure 3C

# Figure 3D

# Figure 3E

# Figure 4

# Figure 5

# Figure 6

# Figure 7

# Figure 8

# Figure 9

Europäisches
Patentamt

European
Patent Office

Office européen
des brevets

# EUROPEAN SEARCH REPORT

Application Number

EP 19 21 4232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 736 016 A2 (SAMSUNG ELECTRONICS CO LTD [KR]) 28 May 2014 (2014-05-28) | 1-4,7, 12-15 | INV. G06T7/11 G06T7/187 |
| Y | * abstract *<br>* paragraphs [0003] - [0005] *<br>* paragraphs [0010] - [0015], [0022] *<br>* paragraphs [0025] - [0027], [0029] *<br>* paragraphs [0032], [0033] * | 10,11 | |
| X | WO 01/26050 A2 (A F A PRODUCTS GROUP INC [US]) 12 April 2001 (2001-04-12) | 1-4,7, 12-15 | |
| Y | * abstract *<br>* page 1, line 24 - page 2, line 3 *<br>* page 3, line 9 - page 4, line 9 *<br>* page 9, line 9 - page 11, line 23 *<br>* page 14, lines 2-8 *<br>* page 15, lines 1-21 *<br>* page 16, lines 3-6 *<br>* page 19, lines 25-28 *<br>* page 22, lines 1-24 *<br>* page 25, lines 18-24 * | 5,6,8-11 | |
| Y | CRIMINISI ANTONIO ET AL: "GeoS: Geodesic Image Segmentation",<br>7 October 2012 (2012-10-07), 12TH EUROPEAN CONFERENCE ON COMPUTER VISION, ECCV 2012;<br>[LECTURE NOTES IN COMPUTER SCIENCE],<br>PAGE(S) 99 - 112, XP047530088,<br>ISSN: 0302-9743<br>ISBN: 978-3-540-37783-2<br>* the whole document * | 5,6,8,9 | TECHNICAL FIELDS SEARCHED (IPC) G06T |
| Y | US 2008/260221 A1 (UNAL GOZDE [US] ET AL) 23 October 2008 (2008-10-23) | 10,11 | |
| A | * paragraphs [0100] - [0108] * | 12,13 | |

The present search report has been drawn up for all claims

| Place of search | Date of completion of the search | Examiner |
|---|---|---|
| Munich | 28 April 2020 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 4232

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2020

| Patent document cited in search report | | Publication date | Patent family member(s) | | Publication date |
|---|---|---|---|---|---|
| EP 2736016 | A2 | 28-05-2014 | CN | 103839254 A | 04-06-2014 |
| | | | EP | 2736016 A2 | 28-05-2014 |
| | | | JP | 2014106980 A | 09-06-2014 |
| | | | KR | 20140070791 A | 11-06-2014 |
| | | | US | 2014146076 A1 | 29-05-2014 |
| WO 0126050 | A2 | 12-04-2001 | AU | 7853900 A | 10-05-2001 |
| | | | WO | 0126050 A2 | 12-04-2001 |
| US 2008260221 | A1 | 23-10-2008 | NONE | | |

EPO FORM P0459

For more details about this annex : see Official Journal of the European Patent Office, No. 12/82

**EP 3 832 597 A1**

**Patent documents cited in the description**

- US 10235605 A

- US 10235605 B